# EUROPEAN PATENT APPLICATION

(11) **EP 0 751 194 A2**
(43) Date of publication of application: **02.01.1997**
(21) Application number: 96303078.8
(22) Date of filing: 01.05.1996
(51) Int. Cl.: C09D 11/00

(54) **A process for making aqueous pigment black ink with high-resistivity dried film for continuous ink jet printers**

(30) Priority: 04.05.1995 US 433689
(71) Applicant: SCITEX DIGITAL PRINTING, Inc., Dayton, Ohio 45420-4099 (US)
(72) Inventor: Chen, Jing-Den, Dayton, Ohio 45458 (US); Hixenbaugh, Jr. John W., Huber Heights, Ohio 45424 (US); Liu, George C.A., Dayton, Ohio 45458 (US); Botros, Raouf,, Centerville, Ohio 45459 (US)
(74) Representative: Hillier, Peter

(57) **Abstract**

An ink jet ink composition comprises a liquid vehicle, a pigment, and a polymer to overcome conductivity. The problem to be addressed for carbon black pigment inks is how to achieve high dried ink film resistivity while maintaining print quality. With the present invention, dried ink resistivity of aqueous pigment ink is improved by using polymers to overcome conductivity. The present invention results in significant improvement in dried film resistivity of carbon black pigment ink jet inks, sufficient to eliminate charge lead to charge lead shorts and improve machine runnability and can, therefore, be used in ink jet printers.

## Description

### Technical Field

The present invention relates to pigment inks and, more particularly, to a process for making aqueous black pigment ink which does not cause electrical shorts in continuous ink jet printers due to conductivity of the dried ink film on charge leads.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517, the disclosures of each of which are totally incorporated herein by reference.

In the ink jet printing art, water soluble dyes are desirable for runnability. However, waterfast inks are highly desirable for producing permanent images. Decreasing the solubility of the dye increases the waterfastness, and vice versa. In the continuous ink jet industry, desire to obtain permanent ink (100% waterfastness and 100% wet-rubfastness) has been in existence for some time. Although this has been achieved by some continuous ink jet manufacturers (EJ-101 ink by Elmjet, VT-16-2000 ink by Videojet and Admark Fast Black Ink by Eastman Kodak Company and Scitex Digital Printing, Inc.), all of these inks are solvent based inks. Ideally, industry would prefer an aqueous ink with permanence qualities.

Current state-of-the-art aqueous ink jet inks utilize water soluble dyes to attain acceptable redissolvability of the dried ink on the orifice plate. This redissolvability is essential for good machine runnability as well as start-up for continuous ink jet printers which do not have a separate printhead cleaning fluid mechanism.

Current dye based inks utilize dyes which are water soluble (at least with limited solubility) which affects waterfastness negatively. A water based pigment ink, on the other hand, may be able to provide waterfastness as pigments are dispersed rather than dissolved. For pigment inks, then, redispersibility, rather than redissolvability, must be achieved to have good system start-up. Use of pigments rather than dyes creates some further complications which are not present with dyes. For example, dye based inks provide dried film which has high dried film electrical resistivity. Pigment based inks, particularly carbon black inks, on the other hand, can provide dried films which are electrically conductive.

In particular, carbon black pigments are very desirable in formulating ink jet inks, due to their insolubility in water, thus producing waterfast ink. However, carbon pigments can cause electrical shorts and printer failure when they form an electrically conductive dried film on charge leads. This is due to the fact that carbon black pigments are electrically conductive. The electrical conductivity property of carbon blacks is well known, and carbon black pigments are used as a conductive and antistatic filler in rubbers and plastics.

It is seen then that there is a need for a process for making aqueous carbon black pigment ink which does not cause electrical shorts, due to conductivity of the dried ink film on charge leads, in continuous ink jet printers.

### Summary of the Invention

This need is met by the process according to the present invention, which is a process of making carbon black pigment (rather than conventional dye-based) aqueous ink jet ink which does not cause electrical shorts due to conductivity of the dried ink film on charge leads. The carbon black pigment aqueous ink jet ink of the present invention achieves a dried ink film resistivity which is increased to an acceptable level so as to have acceptable print quality without any electrical shorts. By the inclusion of a polymer or polymers to the pigment ink, the film resistivity can be increased, i.e., conductivity decreased, sufficiently to prevent charge lead to charge lead shorts.

In accordance with one aspect of the present invention, an ink jet ink composition comprises a liquid vehicle, a pigment, and a polymer. The inclusion of the polymer overcomes conductivity, thereby increasing resistivity. Dried ink film resistivity of aqueous carbon black pigment ink formulated in accordance with this composition is improved by being increased to a level whereby no electrical shorts which cause printer failure or print defects are observed during printing.

Other objects and advantages of the invention will be apparent from the following description and the appended claims.

### Brief Description of the Drawing

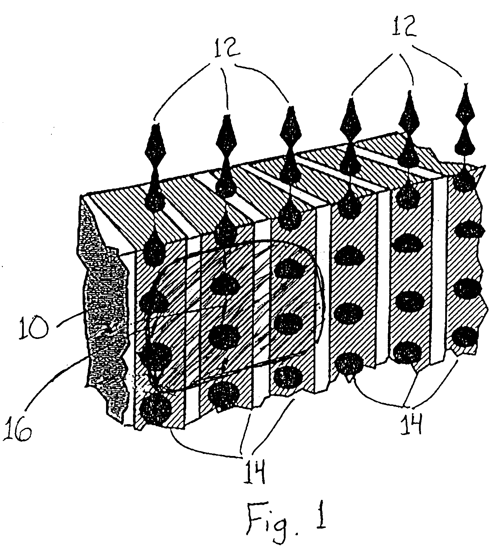

Fig. 1 is an isometric view of the face of a charge plate with ink jets disposed in front of the charge plate.

### Detailed Description of the Invention

The present invention provides for a waterfast ink composition wherein the ink is a carbon black pigment, rather than a conventional dye-based, aqueous ink jet ink, which does not cause electrical shorts, due to conductivity of the dried ink film on charge leads, in continuous ink jet printers.

Conventional aqueous dye based inks are made using dyes which are at least having limited solubility in an aqueous medium. Hence, in an ink, there exists a "true" solution of dye in the medium. When this particular ink is dried, the film formed has very high dried film resistivity.

With some carbon black pigment inks, when a film is formed, the dried film shows fairly low dried film resistance, as illustrated in Example 1, below. This is presumably due to the interparticle connection at the bare carbon black pigment surface, since carbon black pigments are electrically conductive. This then provides at least one path wherein pigments are connected at the "bare" surface (without any adsorbate) of carbon particles. Hence, ink containing carbon black pigments can cause the negative result of electrical shorts on continuous ink jet printers, due to the conductive ink film deposited over charge leads.

The ink jet ink composition according to the present invention comprises a liquid vehicle, a pigment, and a polymer. The polymer is included to overcome conductivity, thereby increasing resistivity. Dried ink film resistivity of aqueous carbon black pigment ink formulated in accordance with this composition is improved by being increased to a level whereby no electrical shorts which cause printer failure or print defects are observed during printing.

The liquid vehicle is selected from the group consisting of a wetting agent, a biocide, a corrosion inhibitor, deionized water, and mixtures thereof. The liquid vehicle may further include a lower alphatic alcohol; a pH modifier such as an amine, a sodium hydroxide, or a potassium hydroxide; and a pH buffer to maintain a desired pH.

The present invention reduces the conductivity, thereby increasing the resistivity, of this ink film, thus preventing the electrical shorts. According to the present invention, resistivity of the ink film can be increased by adding a polymer, such as an acrylic resin or a polyester resin, to ink containing carbon black pigments. Realizing this, the invention is illustrated with the following examples. In the following examples, the electrical resistance was measured on dried drawdown of each ink over a distance of 1 cm. The drawdown was made by using a #6 drawdown bar on a coated paper.

### EXAMPLE 1

Carbon black pigment inks were evaluated for their dried film resistivity. The following table shows results of two carbon black pigment inks, without a polymer added, and with a polymer added:

| FORMULATION | 1A | 1B |
|---|---|---|
| T5 | 93.65% | 83.5% |
| surfactant | 0.5% | 0.5% |
| Joncryl 95 | 0% | 16.0% |
| Electrical resistance | 10kΩ | 520kΩ |

In Example 1, T5 is an aqueous dispersion containing 5 wt% carbon black pigment. Formulation 1A ink contains no polymer and thus has a low dried ink film electrical resistance, of only 10kΩ. When formulation 1A was run in a Scitex 5000 ink jet printer, the printer had start-up problems due to electrical short. This problem was minimized in accordance with the present invention by adding a polymer, such as Joncryl 95, to the ink. This is illustrated in formulation 1B above, which gives a dried ink film resistance of 520kΩ.

### EXAMPLE 2

As will be obvious to those skilled in the art, varying amounts of different polymers can be added to ink to achieve improved dried ink film electrical resistance. In Example 2, for instance, Joncryl 50 was added to ink in formulation 2B, to improve the dried ink film electrical resistance of formulation 1A.

| FORMULATION | 2A | 2B |
|---|---|---|
| water | 93.65% | 89.65% |
| surfactant | 0.25% | 0.25% |
| DMEA | 1.80% | 1.80% |
| carbon black pigment | 2.20% | 2.20% |
| acrylic resin | 1.80% | 1.80% |
| corrosion inhibitor | 0.10% | 0.10% |
| biocide | 0.20% | 0.20% |
| Joncryl 50 | 0% | 4.00% |
| Electrical resistance | 180kΩ | 700kΩ |

As can be seen in Example 2 above, the existence of some polymer, such as a resin, in the ink (1.80% acrylic resin in formulation 2A) improves the electrical resistance to 180kΩ, as compared to 10kΩ electrical resistance with no polymer, as in formulation 1A. However, adding more polymer (for example, 4.0% Joncryl 50 in formulation 2B) further improves the electrical resistance, to 700kΩ. Although formulation 2A did give a better dried ink film electrical resistance than formulation 1A, formulation 2A still did not have enough polymer to give desired dried ink film electrical resistance. When formulation 2A ink was run in a Scitex 5000 ink jet printer, the print sample showed dark defect due to electrical short between charge leads. In accordance with the present invention, this problem was minimized by adding more polymer (i.e., Joncryl 50) to the ink, as shown in formulation 2B, which gave a dried ink film resistance of 700kΩ.

### EXAMPLE 3

Since there are more conductive paths in dried ink film of higher carbon black pigment content, the dried film electrical conductivity increases, or electrical resistivity decreases, with the amount of carbon black pigment in the ink, as shown in the following table:

| | | | |
|---|---|---|---|
| aqueous dispersion | 99.5% T2 | 99.5% T3 | 99.5% T5 |
| wetting agent | 0.5% | 0.5% | 0.5% |
| Electrical resistance | 50kΩ | 20kΩ | 10kΩ |

In Example 3, T2, T3 and T5 are aqueous dispersions containing 2, 3 and 5 wt%, respectively, of carbon black pigment. The electrical resistance was measured on dried drawdown of each ink over a distance of 1 cm. The drawdown was made using a #6 drawdown bar on a coated paper.

In accordance with the present invention, polymer can be added to ink to increase its electrical resistance. The amount of increase in electrical resistance depends on the amount and type of polymer applied. In particular, the addition of Joncryl acrylic polymers to ink are effective for increasing electrical resistance of the dried ink film.

### EXAMPLE 4

S.C. Johnson Company manufactures a series of Joncryl acrylic polymers, such as Joncryl 56, Joncryl 58, Joncryl 61, Joncryl 62, Joncryl 95, Joncryl 537, Joncryl 554, and Joncryl 1679, all having different properties. As illustrated in Example 4 below, the polymer Joncryl 95 was among the most effective of the different polymers tested. The addition of Joncryl 95 to the ink had the desired result of giving low viscosity, due to the lower amount of polymer added, as compared to other types of polymers.

| FORMULATION | | | | |
|---|---|---|---|---|
| T5 | 99.5% | 91.5% | 91.5% | 91.5% |
| wetting agent | 0.5% | 0.5% | 0.5% | 0.5% |
| polymer | 0% | 8.0% | 8.0% | 8.0% |
| Joncryl type | none | 56 | 58 | 61 |
| electrical resistance | 10kΩ | 23kΩ | 20kΩ | 15kΩ |
| T5 | 91.5% | 91.5% | 91.5% | |
| wetting agent | 0.5% | 0.5% | 0.5% | |
| polymer | 8.0% | 8.0% | 8.0% | |
| Joncryl type | 62 | 95 | 537 | |
| electrical resistance | 15kΩ | 42kΩ | 23kΩ | |
| T5 | 83.5% | 83.5% | 83.5% | 83.5% |
| wetting agent | 0.5% | 0.5% | 0.5% | 0.5% |
| polymer | 16.0% | 16.0% | 16.0% | 16.0% |
| Joncryl type | 56 | 58 | 61 | 62 |
| electrical resistance | 117kΩ | 141kΩ | 43kΩ | 46kΩ |
| T5 | 83.5% | 83.5% | 83.5% | 83.5% |
| wetting agent | 0.5% | 0.5% | 0.5% | 0-5% |
| polymer | 16.0% | 16.0% | 16.0% | 16.0% |
| Joncryl type | 95 | 537 | 554 | 1679 |
| electrical resistance | 520kΩ | 160kΩ | 110kΩ | 60kΩ |

In Example 4, T5 is an aqueous dispersions containing 5 wt% of carbon black pigment. The electrical resistance was measured on dried drawdown of each ink over a distance of 1 cm. The drawdown was made using a #6 drawdown bar on a coated paper.

Adding polymer to the ink increases the electrical resistance. Of course, the amount of increase in electrical resistance depends on both the amount and type of polymer added. Although Joncryl 95 was very effective among the different polymers tested, at 8% polymer loading, the dried ink film resistance was still not high enough to prevent electrical shorts in the printer.

As shown above, by increasing the polymer loading in ink from 8% to 16% for each polymer, the dried ink film electrical resistance can be increased. At 16% polymer loading, Joncryl 95 is found to be very effective in increasing the electrical resistance.

It is seen from Example 4 above, then, that the dried ink film electrical resistance increases with the amount and type of polymer added to the ink.

### EXAMPLE 5

Concentrating now on Joncryl 95, which had the most dramatic effect on the electrical resistance measurement in Example 4 above, other benefits are also realized by incorporating a polymer in ink.

| | | | | | | |
|---|---|---|---|---|---|---|
| T2 (%) | 99.5 | 95.5 | 93.5 | 91.5 | 89.5 | 87.5 |
| wet agt (%) | 0.5 | 0.5 | 0.5 | 0.5 | 0.5 | 0.5 |
| polymer Joncryl 95(%) | 0 | 4.0 | 6.0 | 8.0 | 10.0 | 12.0 |
| pigment, wt% | 1.99 | 1.91 | 1.87 | 1.83 | 1.79 | 1.75 |
| electrical resist kΩ | 50 | 170 | 460 | 1400 | 6700 | 76000 |
| op density | 1.39 | 1.52 | 1.57 | 1.57 | 1.58 | 1.71 |
| wet-rub resistance | bad | good | good | good | good | good |
| dry wt ratio polymer/pigment | 0 | 0.63 | 0.96 | 1.31 | 1.68 | 2.06 |
| T3 (%) | 99.5 | 95.5 | 93.5 | 91.5 | 89.5 | 87.5% |
| wet agent(%) | 0.5 | 0.5 | 0.5 | 0.5 | 0.5 | 0.5 |
| polymer Joncryl 95(%) | 0 | 4.0 | 6.0 | 8.0 | 10.0 | 12.0 |
| pigment, wt% | 2.99 | 2.87 | 2.81 | 2.75 | 2.69 | 2.63 |
| electrical resistance kΩ | 20 | 41 | 88 | 180 | 400 | 906 |
| op density | 1.72 | 1.79 | 1.84 | 1.87 | 1.97 | 2.04 |
| wet-rub resistance | bad | fair | good | good | good | good |
| dry wt ratio polymer/pigment | 0 | 0.42 | 0.64 | 0.87 | 1.12 | 1.37 |

At a lower loading of carbon black pigment, the amount of Joncryl 95 needed is lower to achieve good wet-rubfastness and high electrical resistance. For example, for T2, only 4% of Joncryl 95 is needed to achieve good wet-rubfastness; while for T3, 6% of Joncryl 95 is needed to achieve good wet-rubfastness. Adding 6% of Joncryl 95 for T2 gives an electrical resistance of 460kΩ; while for T3, 10% of Joncryl 95 is needed to get even 400kΩ.

As shown in Example 5 above, other benefits of incorporating polymer in ink include higher optical density and improved wet-rub resistance. The optical density increases with the amount of polymer in the ink, and higher optical density can be achieved with less amount of carbon black pigment by adding more polymer. The drawdowns of all these inks have good waterfastness, but the drawdown of ink without any polymer does not have wet-rubfastness. The wet-rubfastness increases with the amount of polymer in the ink. In the examples above for T3, wet-rubfastness of drawdown is fair when the ink comprises 4% polymer, and good wet-rubfastness for inks comprising at least 6% polymer.

In Example 5 above, the dry weight ratio of Joncryl 95 to carbon black pigment is listed. In accordance with the present invention, to achieve both good wet-rub resistance and high electrical resistance, this ratio is preferably higher than about 0.9.

The examples herein also indicate that the electrical resistance is preferably at least higher than 200 kΩ, and in a preferred embodiment is higher than 500 kΩ. The electrical resistance increases with the addition of polymer to the ink and the amount of increase also depends on the particular polymer added. In a preferred embodiment of the present invention, the amount of polymer in the ink formulation should be more than the lowest amount of polymer in the ink formulation which gives an electrical resistance of 200 kΩ in dried drawdown. Also, the maximum amount of polymer in the ink formulation is limited by the maximum viscosity of ink allowable in the printer.

Although Joncryl polymers are described herein, that is not to be considered as limiting the scope of the invention. It will be obvious to those skilled in the art that ink with high-resistivity dried ink film, in accordance with the present invention, can be formulated using many different polymers, without departing from the scope of the invention. For example, other polymers which are effective in increasing high dried ink film electrical resistance include Joncryls manufactured by S.C. Johnson Company, such as Joncryl 50, Joncryl 52, Joncryl 74, and Joncryl 130 acrylic polymers; Carboset acrylic polymers G514H, G552, G1903, G1993, GA1086, GA1324, GA1604, GA2136 and GA2137, manufactured by B.F. Goodrich; Vancryl acrylic polymers manufactured by Air Products, such as Vancryl 445, Vancryl 915, Vancryl 937 and Vancryl 989; and Eastek 1200 and 1300 polyester polymers manufactured by Eastman Chemical.

Referring now to the drawing, the present invention relates to the type of continuous ink jet printing systems such as are developed and manufactured at Scitex Digital Printing, Inc., of Dayton, Ohio. In such systems, a plurality of jets is created at high spatial resolution by a drop generator, which stimulates the natural break-up of jets into uniform streams of droplets.

Fig. 1 represents an isometric view of the face of a charge plate 10 with the ink jets disposed in front of the charge plate. A drop generator supplies streams of essentially coplanar and colinear drops 12, parallel to the face of the charge plate 10. Each of the drop streams 12 are in linear alignment with a conducting charge lead 14. Prior to disintegration, the streams of ink 12 are electrically conducting. When an electric potential is applied to one of the plurality of charge leads 14, the last drop which is still connected to the jet in front of that charge lead acquires an electric charge by induction. By applying a predetermined voltage to any of the charge leads in a timed relationship to the jet disintegration process, successive drops can be either charged or uncharged. In response to the impulsive electrostatic force, the charged drops are attracted towards the face of a catcher. The trajectory of the uncharged drops is not deflected towards the catcher, so the uncharged drops move unimpeded towards a print media. By appropriate programming of the plurality of charge leads 14 in synchronism with the disintegration of the jet into a stream of drops 12, a desired pattern of drops moving towards the substrate can be produced.

Carbon pigments can cause electrical shorts and printer failure when they form an electrically conductive dried film 16 covering charge leads 14. The ink film 16 can form during start-up, shutdown or operation of the printer. The film can cover the whole or part of the charge plate, resulting in electrical shorts between the charge leads covered by the film.

The process according to the present invention is a process of making carbon black pigment (rather than conventional dye-based) aqueous ink jet ink which does not cause electrical shorts due to conductivity of the dried ink film on charge leads. The carbon black pigment aqueous ink jet ink of the present invention achieves a dried ink film resistivity which is increased to an acceptable level so as to have acceptable print quality without any electrical shorts. The present invention reduces this dried ink film conductivity by the inclusion of a polymer.

### Industrial Applicability and Advantages

The present invention is useful in the field of ink jet printing, and has the advantage of formulating an aqueous carbon black pigment ink for use in ink jet printing ink which has increased dried film resistivity. The present invention has the further advantage of providing a process by which essential dried ink film resistivity is improved to avoid any electrical shorts.

The invention has been described in detail with particular reference to certain preferred embodiments thereof, but it will be understood that modifications and variations can be effected within the spirit and scope of the invention.

## Claims

1. An ink jet ink composition comprising a liquid vehicle, a pigment, and a polymer.

2. An ink jet ink composition as claimed in claim 1 wherein the polymer comprises a resin.

3. An ink jet ink composition as claimed in claim 1 wherein the polymer is selected from the group consisting of acrylic resins.

4. An ink jet ink composition as claimed in claim 1 wherein the polymer is selected from the group consisting of polyester resins.

5. An ink jet ink composition as claimed in claim 1 wherein the polymer comprises Joncryl 95.

6. A process for generating images which comprises incorporating into an ink jet printing apparatus the ink composition of claim 1 and forming images by causing the ink to be expelled in droplets onto a substrate, thereby generating an image on the substrate.

7. A process as claimed in claim 6 wherein the image is generated by a continuous stream ink jet printing process.

8. An ink jet composition as claimed in claim 1 wherein the liquid vehicle is selected from the group consisting of a wetting agent, a biocide, deionized water, a corrosion inhibitor, a lower alphatic alcohol, and mixtures thereof.

9. An ink jet composition as claimed in claim 8 wherein the liquid vehicle is selected from the group consisting of a wetting agent, a biocide, deionized water, a corrosion inhibitor, a lower alphatic alcohol, a pH modifier, and mixtures thereof.

10. An ink jet composition as claimed in claim 9 wherein the pH modifier comprises an amine.
